# EUROPÄISCHE PATENTSCHRIFT

(11) **EP 3 465 511 B1**
(45) Veröffentlichungstag und Bekanntmachung des Hinweises auf die Patenterteilung: **24.06.2020**
(21) Anmeldenummer: 17729350.3
(22) Anmeldetag: 18.05.2017
(51) Int. Cl.: G06F 21/32, G06F 21/34

(54) **BIOMETRISCH BASIERTES AUSLÖSEN EINER NUTZAKTION MITTELS EINES ID-TOKENS**
BIOMETRIC-BASED TRIGGERING OF A USEFUL ACTION BY MEANS OF AN ID TOKEN
DÉCLENCHEMENT SUR UNE BASE BIOMÉTRIQUE D'UNE ACTION UTILE AU MOYEN D'UN JETON D'IDENTIFICATION

(30) Priorität: 03.06.2016 DE 102016110274
(43) Veröffentlichungstag der Anmeldung: 10.04.2019
(73) Patentinhaber: Bundesdruckerei GmbH, 10969 Berlin (DE)
(72) Erfinder: BÖSCH, Christoph, 14558 Nuthetal (DE)
(74) Vertreter: Richardt Patentanwälte PartG mbB
(86) Internationale Anmeldenummer: PCT/DE2017/100425
(87) Internationale Veröffentlichungsnummer: WO 2017/206985

(56) Entgegenhaltungen:
- EP-A1- 3 059 696
- KR-B1- 101 343 349
- US-A1- 2003 014 372

## Beschreibung

Die vorliegende Erfindung betrifft ein Verfahren für ein biometrisch basiertes Auslösen einer Nutzaktion mittels eines ID-Tokens.

Ein ID-Token zum Auslösen einer Nutzaktion wird üblicherweise von einem Trustcenter herausgegeben. Als Beispiel für ein derartiges ID-Token kann eine Smartcard dienen, eine Nutzaktion kann ein elektronisches oder digitales Signieren eines elektronischen Dokumentes oder ein Verschlüsseln von Daten sein.

Ein derartiger ID-Token wird üblicherweise im Herstellungsprozess, spätestens vor der Herausgabe an den Nutzer noch in einem Hochsicherheitsbereich personalisiert, d.h., es werden identitätsstiftende Attribute des Nutzers, wie beispielsweise sein Name oder seine Emailadresse, in den ID-Token eingebracht. In dieser personalisierten Form wird der ID-Token dann dem Nutzer zugestellt. Der ID-Token ist dann in keiner Weise mehr veränderbar, vor allem ist er auch nicht für etwaige zukünftige Anwendungen flexibel erweiterbar.

Es besteht angesichts der zunehmenden Digitalisierung ein Problem, auf der Grundlage einer digital nachweisbaren Identität elektronische Nutzaktionen auslösen zu können, ohne für jede Art einer neuen Anwendung einen neuen ID-Token erwerben zu müssen.

Bekannt ist ein USB-Speicher-Stick mit integriertem Fingerabdruck-Scanner, der nach einem ersten Einlernen einen Zugriff auf den Speicher nur nach Auflegen des richtigen Fingers freischaltet. Allerdings ist ein derartiger Speicher-Stick nicht als ID-Token zu verstehen, da darin keine identitätsstiftenden Daten in funktional auszuwertender Weise gespeichert sind.

Patentschriften KR 101343349 B1 und US 2003014372 A1 offenbaren Verfahren zur Personalisierung von ID-Tokens mit biometrischen Daten.

Die vorliegende Erfindung macht es sich daher zu Aufgabe, ein Verfahren für ein biometrisch basiertes Auslösen einer Nutzaktion mittels eines einem Nutzer zugeordneten ID-Tokens zu schaffen, sowie ein zur Durchführung dieses Verfahrens hergerichtetes System.

Die der Erfindung zugrundeliegende Aufgabe wird durch Merkmale der unabhängigen Ansprüche gelöst. Die abhängigen Ansprüche beschreiben Ausführungsformen.

Ausführungsformen betreffen ein Verfahren für ein biometrisch basiertes Auslösen einer Nutzaktion mittels eines einem Nutzer zugeordneten ID-Tokens, welches unter einem personalisierungsbezogenen Erfassen und Abspeichern eines biometrischen Merkmals personalisiert wurde und welcher ID-Token unter einem aktivierungsbezogenen Erfassen des korrespondierenden Merkmals aktiviert wurde. Das Verfahren umfasst: Vorlegen des aktivierten ID-Tokens einer Einrichtung zum Auslösen einer Nutzaktion; b) nutzaktionsbezogenes Erfassen des korrespondierenden biometrischen Merkmals des Nutzers; c) Vergleichen des nutzaktionsbezogen erfassten korrespondierenden biometrischen Merkmals des Nutzers mit dem personalisierungsbezogen abgespeicherten korrespondierenden biometrischen Merkmal des Nutzers; und d) im Fall, dass das Vergleichen ergibt, dass das nutzaktionsbezogen erfasste korrespondierende biometrische Merkmal des Nutzers hinreichend mit dem personalisierungsbezogen abgespeicherten korrespondierenden biometrischen Merkmal des Nutzers übereinstimmt: Auslösen der Nutzaktion.

Der Begriff "ID-Token" bezeichnet eine Vorrichtung, wie beispielsweise ein tragbares elektronisches Gerät, zum Beispiel einen sogenannten USB-Stick, oder ein Dokument, insbesondere ein Wert- oder Sicherheitsdokument. Der ID-Token kann kontaktbehaftet oder kontaktlos sein.

Der ID-Token umfasst zumindest einen geschützten persistenten Speicherbereich, der zum Speichern und Auslesen identitätsstiftender Angaben und/oder biometrischer Merkmale geeignet ist, wobei ein Zugriff auf diesen Speicherbereich nur möglich ist, wenn in dem ID-Token angeordnete Prozessormittel festgestellt haben, dass der beabsichtigte Zugriff zulässig ist, so dass die betreffenden Daten ausgelesen und/oder abgespeichert oder geschrieben werden können.

Unter einem "Dokument" werden papierbasierte und/oder kunststoffbasierte Dokumente verstanden, wie zum Beispiel Ausweisdokumente, insbesondere Reisepässe, Personalausweise, Visas sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung von zumindest einem Attribut integriert ist.

Eine Übereinstimmung eines erfassten biometrischen Merkmals mit einem korrespondierenden abgespeicherten biometrischen Merkmal wird als "hinreichend" bezeichnet, wenn eine Identität der erfassten im Vergleich zu den abgespeicherten Daten vorliegt, oder zumindest gemäß einem Kriterium ein vorbestimmter Grenzwert nicht überschritten wird. Hierfür sind diverse Verfahren bekannt: Beispielsweise kann in einem n-Tupel-Raum als Kriterium ein Skalarisieren im Rahmen etwa einer L2-Norm oder einer Tschebyscheff-Norm verwendet werden und als vorbestimmter Grenzwert könnte vorgesehen sein, dass die Differenz der normgemäß skalarisierten Einzelwerte normiert auf beispielsweise den abgespeicherten skalarisierten Wert einen Wert von beispielsweise 5% oder 3% oder 1% nicht überschreiten darf.

Die vorliegende Erfindung ist besonders für solche ID-Token vorteilhaft, die zur vollständig internen Prüfung der Gültigkeit eines Zertifikats ausgebildet sind, also ohne beispielsweise auf einen externen Server oder dergleichen zugreifen zu müssen. Insbesondere ist die Erfindung vorteilhaft für ID-Token, die zur Prüfung der Gültigkeit von Zertifikaten eines Trustcenters, zumindest aber von einer in Bezug auf den Verwendungszweck vertrauenswürdigen Instanz, ausgebildet sind.

Eine "Nutzaktion" ist eine Aktion, die der Nutzer durchzuführen beabsichtigt. Hierbei kann es sich beispielsweise um ein Signieren eines Dokumentes, ein Verschlüsseln eines Datums, einen Logon-Vorgang an einem Arbeitsplatzrechner oder um ein Öffnen einer Sperre, beispielsweise ein Öffnen einer Tür oder eines Drehkreuzes oder dergleichen handeln.

Bei dem "Nutzdatensatz" kann es sich um ein Zertifikat handeln, das von einem Trustcenter, zumindest aber von einer in Bezug auf den Verwendungszweck vertrauenswürdigen Instanz, ausgestellt wurde. Der Nutzdatensatz kann Verschlüsselungs- und/oder Signaturschlüssel umfassen. In einem einfachen Fall kann der Nutzdatensatz ein Datumsintervall umfassen, innerhalb dessen ein Öffnen einer Sperre möglich ist - nach Ablauf des letzten abgespeicherten Datums würde dann beispielsweise die Sperre sich für den Nutzer nicht mehr öffnen.

Ein Zertifikat kann ein Zertifikat nach dem Standard X.509 v3 sein. Insbesondere kann dem Zertifikat ein Schlüsselpaar, bestehend aus einem privaten und einem öffentlichen Schlüssel, zugeordnet sein. Das Schlüsselpaar kann zufällig erzeugt worden sein.

Es ist möglich, dass der ID-Token, in dem das Zertifikat gespeichert ist, das Schlüsselpaar selbst erzeugt. Dies ist eine besonders sichere Vorgehensweise, weil dann insbesondere der private Schlüssel niemals ausgelesen werden kann. Alternativ wird erwogen, dass das Schlüsselpaar extern erzeugt wird. Dies hat den Vorteil, dass das Schlüsselpaar erheblich schneller erzeugt wird als dies mit einem herkömmlichen ID-Token möglich ist. Der Transport des so erzeugten kryptografischen Materials kann dann, beispielsweise, gemäß dem Standard PKCS#12 auf den ID-Token übertragen werden.

Das Zertifikat einschließlich des Schlüsselpaares kann für Zwecke eines Email-Versands vorgesehen sein, beispielsweise zum Verschlüsseln der Email mittels des privaten Schlüssels oder Signieren der Email mittels eines weiteren privaten Schlüssels, der einem weiteren Zertifikat zugeordnet ist.

Das Zertifikat kann zur Durchführung eines Login an einem Arbeitsplatzrechner oder zum Öffnen eines physischen Zugangs zu einem Raum vorgesehen sein.

Der ID-Token kann derart hergerichtet sein, dass er verschiedene Zertifikate für verschiedene Zwecke oder Anwendungen trägt.

Es kann beispielsweise vorgesehen sein, dass das Schlüsselpaar oder die Schlüsselpaare für Email-Anwendungen außerhalb des ID-Tokens erzeugt werden. Ferner kann vorgesehen sein, dass das Schlüsselpaar oder die Schlüsselpaare für einen Login oder einen Zugangsvorgang nur auf dem ID-Token selbst berechnet werden.

Es wird erwogen, dass ein Zertifikat, das außer wenigstens einem identitätsstiftenden Merkmal einen signierten öffentlichen Schlüssel des zugeordneten kryptografischen Schlüsselpaares umfasst. Alternativ können das identitätsstiftende Merkmal und der öffentliche Schlüssel des zugeordneten Schlüsselpaares gemeinsam signiert sein.

Beispielsweise können der öffentliche Schlüssel und das identitätsstiftende Merkmal mittels eines privaten Schlüssels einer Vertrauensinstanz signiert sein. Signiert dann ein Nutzer beispielsweise ein Dokument mittels seines privaten Schlüssels, der ein privater Signaturschlüssel sein kann, so kann ein Empfänger des Dokuments nicht nur feststellen, dass der Nutzer das Dokument signiert hat, sondern, da dem Empfänger auch das Signatur-Zertifikat zugeht, der Empfänger kann, aufgrund des von der Vertrauensinstanz signierten identitätsstiftenden Merkmals nebst öffentlichen Signatur-Schlüssel des Nutzers, sicher sein, dass der Unterzeichner die behauptete Identität innehat und die Unterschrift echt ist.

Mit "einem Nutzer zugeordneten ID-Token" ist insbesondere gemeint, dass der ID-Token einem Nutzer per Personalisierung zugeordnet ist. Der dem Nutzer zugeordnete ID-Token ist somit unter einem personalisierungsbezogenen Erfassen und Abspeichern zumindest eines biometrischen Merkmals personalisiert, wobei vorzugsweise vorgesehen sein kann, dass zusätzlich ein identitätsstiftendes Attribut mit abgespeichert wird.

Ein biometrisches Merkmal kann einen oder mehrere Fingerabdrücke des Nutzers umfassen, oder eine Stimmprobe oder ein Ergebnis eines Irisscans. Für den Fall, dass ein Fingerabdruck verwendet wird, kann vorgesehen sein, dass sich auf dem ID-Token selbst ein Fingerabdrucksensor befindet, so dass die mit dem Fingerabdruck verknüpften biometrischen Daten immer im Herrschaftsbereich des Nutzers bleiben werden.

Die Personalisierung des ID-Tokens wird unter Anwesenheit des Nutzers durchgeführt. Mit "personalisierungsbezogen" sind insbesondere die Handlungen gemeint, die Rahmen der Personalisierung vorgenommen werden.

Beispielsweise kann vorgesehen sein, dass der Nutzer seinen ID-Token von einer Abteilung eines Unternehmens erhält, beispielsweise von der Personalabteilung oder vom Werkschutz. Ein Sachbearbeiter, der ein Gerät zur Personalisierung bedient, leitet beispielsweise den Nutzer an, die erforderlichen Schritte vorzunehmen, zumindest also beispielsweise einen Finger auf einen auf dem ID-Token oder an dem Gerät zur Personalisierung kommunikativ angeordneten Fingerabdrucksensor zu legen. Hernach werden identitätsstiftende Angaben, wie beispielsweise der Name und/oder die E-Mail-Adresse des Nutzers am Gerät zu Personalisierung eingegeben. Schließlich können das biometrische Merkmal und die identitätsstiftenden Daten in den ID-Token eingeschrieben werden.

Es kann vorgesehen sein, dass Speicherbereiche des ID-Tokens derart hergerichtet sind, dass nur unter Angabe eines Administratorpasswortes die identitätsstiftenden Daten und die biometrischen Daten in den ID-Token eingeschrieben werden. Das Administratorpasswort kann beispielsweise mit der Losnummer von produzierten unpersonalisierten ID-Token variieren.

Alternativ ist ein Gerät zur Personalisierung denkbar, das in der vorstehend beschriebenen Weise zu den vorstehend beschriebenen Prozessschritten ausgestaltet ist, allerdings als Selbstbedienungsterminal ausgestaltet ist. In diesem Falle sind im ID-Token und im Selbstbedienungsterminal zentral ausgegebene Zertifikate mit gemeinsamem Vertrauensanker hinterlegt, so dass ein vertrauenswürdiges Personalisieren des ID-Tokens möglich ist.

Unabhängig davon, ob die Personalisierung unter Einsatz eines Administrators oder eines Selbstbedienungsterminals vorgenommen wird, wird eine Vertrauensinstanz einbezogen. Beispielsweise können in der Personalisierungsvorrichtung das oder die Schlüsselpaare erzeugt werden und die identitätsstiftenden Daten nebst öffentlichem Schlüssel an eine Vertrauensinstanz zum Signieren zugesandt werden.

Von der Vertrauensinstanz wird ein Zertifikat empfangen, das außer einer Kennung beispielsweise zumindest die identitätsstiftenden Daten, den öffentlichen Schlüssel des Nutzers, die Signatur der Vertrauensinstanz sowie eine Information zum Erreichen der Vertrauensinstanz enthält.

Es wird erwogen, dass das oder die Schlüsselpaare, denen in einem späteren Schritt jeweils ein Zertifikat zuzuordnen sein wird, bereits fertig im unpersonalisierten ID-Token vorliegen und erst bei der Personalisierung, also beim Abspeichern der identitätsstiftenden Merkmale, die Zertifikate nebst Signatur durch die Vertrauensinstanz erzeugt werden.

Mit "Auslösen einer Nutzaktion" ist insbesondere gemeint, dass eine Aktion ausgelöst wird, bei der es sich beispielsweise um ein Signieren, Verschlüsseln, ein Logon oder ein Öffnen einer Zugangssperre wie beispielsweise einer Tür handeln kann.

Mit "nutzaktionsbezogenem Erfassen" ist insbesondere in Abgrenzung zur Personalisierung und zur Aktivierung gemeint, dass nunmehr der eigentliche Verwendungszweck des ID-Tokens adressiert wird.

Mit "korrespondierendem biometrischen Merkmal" des Nutzers ist gemeint, dass, wenn beispielsweise der Abdruck der Fingerkuppe des rechten Zeigefingers bei der Personalisierung als biometrisches Merkmal verwendet wurde, dass in darauffolgenden Schritten jeweils auf dasselbe Merkmal Bezug genommen wird, eben - beispielsweise - den Abdruck der Fingerkuppe des rechten Zeigefingers. Diese Differenzierung ist insbesondere dann vonnöten, wenn mehrere verschiedene biometrische Merkmale einbezogen werden, beispielsweise Fingerabdruck und Iris.

"Vergleichen des nutzaktionsbezogen erfassten korrespondierenden biometrischen Merkmals des Nutzers mit dem personalisierungsbezogen abgespeicherten korrespondierenden biometrischen Merkmal des Nutzers" kann also in einem Beispiel bedeuten, dass ein Abdruck der Kuppe des rechten Zeigefingers personalisierungsbezogen abgespeichert wurde und dann dementsprechend, wenn ein Auslösen der Nutzaktion anvisiert wird, also nutzaktionsbezogen, der Nutzer wiederum das korrespondierende biometrische Merkmal, in diesem Fall also die Kuppe seines rechten Zeigerfingers, zur Erfassung des biometrischen Merkmals bereitstellt.

In einem Vergleich des nutzaktionsbezogen - also in dem Moment, in dem das Auslösen der Nutzaktion anvisiert wird - erfassten biometrischen Merkmals mit dem im Rahmen der Personalisierung erfassten und abgespeicherten biometrischen Merkmals wird dann festgestellt, ob eine Übereinstimmung des erfassten mit dem abgespeicherten, korrespondierenden, Merkmal vorliegt, oder zumindest eine hinreichende Übereinstimmung vorliegt.

Falls die Übereinstimmung oder zumindest hinreichende Übereinstimmung vorliegt, wird die anvisierte Nutzaktion ausgelöst.

In Ausführungsformen umfasst das personalisierungsbezogene Erfassen des biometrischen Merkmals: 1) Personalisieren eines unpersonalisierten ID-Tokens unter Verwendung wenigstens eines identitätsstiftenden Attribut des Nutzers; 2) Schreiben des identitätsstiftenden Attributs in einen ersten persistenten Speicherbereich des ID-Tokens, wobei der erste persistente Speicherbereich ein geschützter Speicherbereich ist; 3) Erfassen des biometrischen Merkmals des Nutzers; 4) Schreiben des biometrischen Merkmals des Nutzers in einem zweiten persistenten Speicherbereich des ID-Tokens, wobei der zweite persistente Speicherbereich ein geschützter Speicherbereich ist, um so ein abgespeichertes biometrisches Merkmal des Benutzers zu erhalten.

Insbesondere kann vorgesehen sein, dass das Personalisieren des unpersonalisierten ID-Tokens dezentral vorgenommen wird. Beispielsweise kann vorgesehen sein, dass das ID-Token an einer Stelle produziert wird, beispielsweise in einem Hochsicherheitsbereich, und dass das Personalisieren einschließlich Erfassen und Speichern der biometrischen Merkmale, zumindest beispielsweise eines oder mehrerer Fingerabdrücke, an einer dafür vorgesehenen Ausgabestelle vorgenommen wird, beispielsweise bei der Personalabteilung oder beim Wachschutz oder der Sicherheitszentrale.

Unter einem persistenten Speicherbereich des ID-Tokens wird beispielsweise ein Speicherbereich des ID-Tokens verstanden, dessen Inhalt durch im Programmspeicher des ID-Tokens gespeicherte Instruktionen geändert werden kann und erhalten bleibt, auch wenn der ID-Token von der Energieversorgung getrennt wird.

Unter einem geschützten Speicherbereich des ID-Tokens wird ein Speicherbereich auf dem ID-Token verstanden, der nur dann auslesbar und/oder schreibbar ist, wenn im Programmspeicher des ID-Tokens gespeicherte Instruktionen zuvor eine entsprechende Berechtigung festgestellt haben.

In Ausführungsformen umfasst das aktivierungsbezogene Erfassen des biometrischen Merkmals: 1) Bereitstellen eines Nutzdatensatzes; 2) Erfassen des biometrischen Merkmals des Nutzers; 3) Vergleichen des erfassten korrespondierenden biometrischen Merkmals des Nutzers mit dem abgespeicherten korrespondierenden biometrischen Merkmal des Nutzers; und 4) im Fall, dass das Vergleichen ergibt, dass das erfasste korrespondierende biometrische Merkmal mit dem abgespeicherten korrespondierenden biometrischen Merkmal des Nutzers hinreichend übereinstimmt: Schreiben des Nutzdatensatzes in einen dritten persistenten Speicherbereich des ID-Tokens, wobei der dritte persistente Speicherbereich ein geschützter Speicherbereich ist.

Ausführungsformen sind besonders vorteilhaft, weil auf diese Weise der ID-Token für diverse Zwecke aktiviert werden kann.

Mit "aktivierungsbezogen" sind insbesondere die Handlungen gemeint, die Rahmen der Aktivierung vorgenommen werden.

Mit "aktiviert" ist insbesondere "aktiviert für einen vorbestimmten Zweck" gemeint. Im Falle eines Betriebsausweises beispielsweise, der beispielsweise in der Personalabteilung oder beim Wachschutz oder der Sicherheitszentrale personalisiert wurde, könnte zeitnah auch eine Aktivierung für den Zweck des Zugangs zum Firmengelände und/oder zu bestimmten Bereichen unterschiedlicher Sicherheitseinstufung auf dem Gelände vorgenommen werden.

Bei dem "Nutzdatensatz" kann es sich um ein Zertifikat handeln, das zu diesem Zwecke vom Unternehmen ausgegeben wurde.

Zusätzlich kann mit dem "Aktivieren" gemeint sein, dass ein Anbieter von Dienstleistungen einen Nutzdatensatz auf dem ID-Token abspeichert. Hierbei kann es sich um den Betreiber einer Werkskantine oder ein Versandhaus oder ein Trustcenter handeln.

Da die biometrischen Merkmale und die identitätsstiftenden Attribute, also beispielsweise Fingerabdruck und Name mit Email, bereits in der Personalisierung im ID-Token abgespeichert wurden, kann nun eine Anwendung auf dem ID-Token ermöglicht werden.

Bei der Anwendung kann es sich um eine Signatur- und/oder Verschlüsselungsfunktionalität handeln. Es ist auch denkbar, dass sich die Anwendung auf ein Logon an einem Arbeitsplatzrechner bezieht oder, dass einfach ein Zugang zu einer bestimmten Räumlichkeit gewährleistet werden kann.

In sehr flexibler Weise können der Anbieter und der Nutzer jederzeit einen aktualisierten Nutzdatensatz auf dem ID-Token abspeichern. Ist beispielsweise ein Signaturzertifikat nach einigen Jahren bestimmungsgemäß abgelaufen, so kann dieses durch ein aktualisiertes Zertifikat ausgewechselt werden. Es ist sogar möglich, Signaturzertifikate verschiedener Trustcenter zu laden, so dass der Nutzer selbst entscheiden kann, wann er unter Verwendung von welchen Zertifikaten er signiert.

Es ist auch denkbar, dass diverse weitere Nutzdatensätze auf dem ID-Token im Rahmen von aufeinanderfolgenden Aktivierungen abgespeichert werden, so dass dieses ID-Token in sehr flexibler und vielseitiger Weise eingesetzt werden kann.

In Ausführungsformen umfasst also das Auslösen der Nutzaktion eine Vornahme einer elektronischen Signatur und/oder einer Verschlüsselung eines Datensatzes und/oder eines Logon an einem Rechner und/oder eines Öffnen eines Zugangs.

Ein geschützter Speicherbereich ist durch im ID-Token abgelegte Programm-Instruktionen derart geschützt, dass ein Lesen und/oder Schreiben in den geschützten Speicherbereich nur möglich ist, wenn die Programm-Instruktionen ermitteln, dass für das Lesen und/oder Schreiben eine vorbestimmte Bedingung erfüllt ist.

Das Schreiben des identitätsstiftenden Attributs und des biometrischen Merkmals des Nutzers wird während des personalisierungsbezogenen Erfassens nur an einer dafür vorgesehenen Personalisierungskonfiguration vorgenommen.

In Ausführungsformen umfasst ein System zur Durchführung eines wie vorstehend beschriebenen Verfahrens: - einen ID-Token umfassend: einen Prozessor, einen Speicher zum Speichern von Programminstruktionen, einen persistenten Speicher zum Speichern von Nutzer-bezogenen Informationen, einen durch wenigstens einen Teil der Programminstruktionen geschützten Speicher zum Speichern von zugriffsbeschränkten Nutzer-bezogenen Informationen; - einen Rechner mit einer ersten Schnittstelle zur Kommunikation mit dem ID-Token sowie zu dessen Energieversorgung; - einen biometrischen Sensor, der am ID-Token und/oder an einer zweiten Schnittstelle des Rechners vorgesehen ist; - eine Komponente zum Durchführen der Nutzaktion.

In Ausführungsformen ist die Komponente zum Durchführen der Nutzaktion wenigstens eines von folgenden: Signaturprogramm zum Unterstützen eines Erzeugens einer digitalen Signatur mithilfe des ID-Tokens; Verschlüsselungsprogramm zum Unterstützen eines Verschlüsselns eines Datums mithilfe des ID-Tokens; Aktorschnittstelle zur Betätigung eines Öffnungs- und/oder Schließmechanismus'; Authentifizierungsprogramm zum Unterstützen eines Logon am Rechner mithilfe des ID-Tokens.

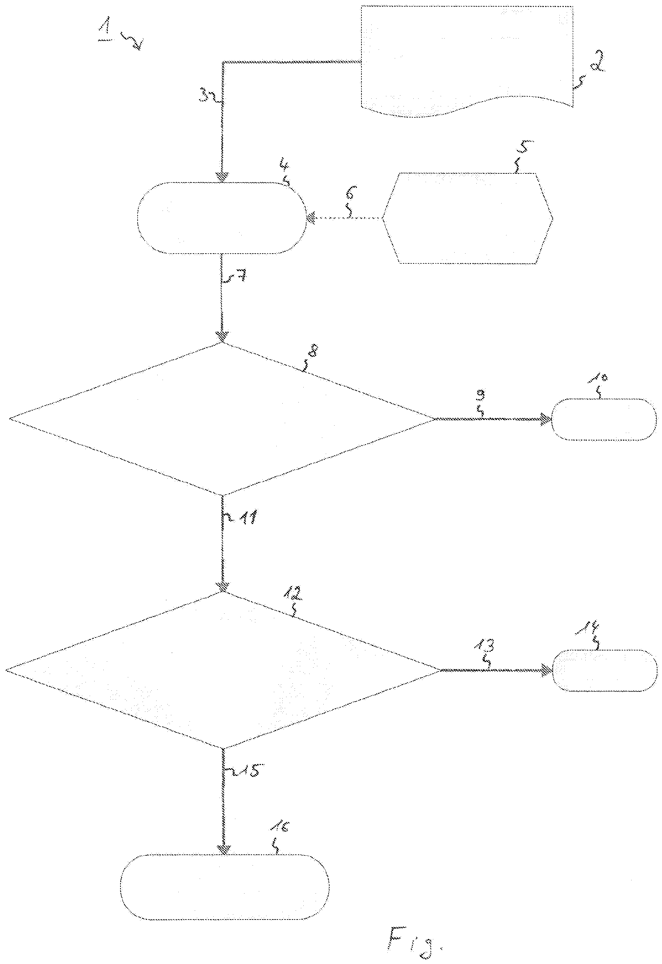

Im Weiteren werden Ausführungsformen der Erfindung mit Bezugnahme auf die Figur der anliegenden Zeichnung erläutert. Es zeigt:
- Figur:: ein Ablaufschema für ein Aktivieren eines ID-Tokens.

Die Figur zeigt ein Ablaufschema 1 für ein Aktivieren eines ID-Tokens.

Vorausgesetzt ist bei Bezugszeichen 2, dass der ID-Token 4 personalisiert ist, d.h., dass identitätsstiftende Daten und das biometrische Merkmal abgespeichert sind. Der Nutzdatensatz 2 kann ein Zertifikat und/oder Schlüssel auf den Nutzer des ID-Tokens, beispielsweise den Eigentümer einer Smartcard bereitgestellt sein und wird vorerst in einen flüchtigen Speicherbereich des ID-Tokens 4 geladen. Die Personalisierung kann einem dazu geeigneten Schreib-Lese-Gerät vorgenommen worden sein. Im Rahmen der Personalisierung werden identitätsstiftende Daten, wie beispielsweise Name und/oder Email des Nutzers sowie mindestens ein biometrisches Merkmal in einen geschützten persistenten Speicherbereich des ID-Token abgespeichert. Damit ein unzulässiges Überschreiben oder Abändern der identitätsstiftenden Daten oder des biometrischen Merkmals unterbunden ist, kann vorgesehen sein, dass eine Abfrage von Vertrauensankern im ID-Token und/oder im Schreib-Lese-Gerät vorgenommen wird und nur dann ein Überschreiben oder Abändern möglich ist, wenn die Vertrauensprüfung erfolgreich gelaufen ist.

Sobald der Nutzer den ID-Token vorgelegt hat und das Schreib-Lese-Gerät für das Aktivieren des ID-Tokens bereit ist, wird dem Nutzer signalisiert, dass er das korrespondierende biometrische Merkmal vorlegen soll. Beispielsweise legt der Nutzer einen Finger auf einen Sensor 5 für das biometrische Merkmal zur Erfassung des Fingerabdrucks. Der Sensor 5 kann sich auf dem ID-Token 4 befinden oder in einer Lesevorrichtung. In jedem Falle werden die vom Sensor erfassten biometrischen Daten an den Prozessor (nicht gezeigt) des ID-Tokens geschickt, 6.

Hernach nimmt der ID-Token einen Prüfschritt 7 vor, in dem er das soeben erfasste biometrische Merkmal mit dem abgespeicherten biometrischen Merkmal auf Übereinstimmung oder zumindest hinreichende Übereinstimmung überprüft.

In einem Entscheidungsschritt 8 verzweigt das Verfahren in Abhängigkeit davon, ob eine zumindest hinreichende Übereinstimmung vorliegt oder nicht. In dem Fall, dass keine hinreichende Übereinstimmung vorliegt, wird zum Ungleichheits-Zweig 9 verzweigt und das Verfahren bricht im Abbruch-Schritt 10 ab, ohne den Nutzdatensatz im persistenten Speicher des ID-Tokens zu speichern.

In dem Fall, dass eine hinreichende Übereinstimmung vorliegt, wird zum Gleichheitszweig 11 verzweigt.

Nachfolgend wird überprüft, ob eine Übereinstimmung der identitätsstiftenden Merkmale vorliegt, es wird also beispielsweise überprüft, ob der in diesem Vorgang des Aktivierens des ID-Tokens eingegebene Name und/oder Email-Adresse mit dem beim Personalisieren abgespeicherten Namen und/oder Email-Adresse übereinstimmt.

Aus Gründen der Eindeutigkeit wird hier auf eine exakte Identität geprüft.

Falls keine exakte Identität vorliegt, wird in der Entscheidungs-Verzweigung 12 zum Ungleichheitszweig 13 verzweigt und das Verfahren bricht im Abbruch-Schritt 14 ab, ohne den Nutzdatensatz im persistenten Speicher des ID-Tokens zu speichern.

Falls eine exakte Identität vorliegt, wird in der Entscheidungs-Verzweigung 12 zum Gleichheitszweig 15 verzweigt.

Dem Gleichheitszweig 15 folgend, wird nun der Nutzdatensatz 2, beispielsweise also ein Zertifikat und/oder ein kryptografischer Schlüssel, im persistenten Speicher des ID-Tokens gespeichert.

In Abwandlung von der obenstehenden Beschreibung kann in nicht gezeigter Weise vorgesehen sein, dass der Nutzdatensatz erst dann dem ID-Token zugeführt wird, wenn erfolgreich die hinreichende Übereinstimmung des biometrischen Merkmals und die Übereinstimmung der identitätsstiftenden Daten festgestellt wurde.

Nun ist der ID-Token zur Nutzung vorbereitet oder aktiviert.

Es kann vorgesehen sein, dass die vorgenannten Verfahrensschritte vollständig in dem ID-Token vorgenommen werden. Insbesondere kann vorgesehen sein, dass die Erfassung des biometrischen Merkmals, beispielsweise, mittels eines an dem ID-Token vorgesehenen Fingerabdrucksensors vorgenommen wird. Die Eingabe der identitätsstiftenden Merkmale sowie des Nutzdatensatzes wird allerdings immer mittels eines geeigneten Schreib-Lese-Geräts vorgenommen werden müssen.

In einem Nutzungsvorgang ist es nun möglich, dass beispielsweise der ID-Token einem hierfür vorgesehenen Lese-Gerät vorgelegt wird. Das Lese-Gerät weist eine Schnittstelle zur Kommunikation mit dem ID-Token auf, also beispielsweise eine kontaktbehaftete oder eine drahtlose, beispielsweise RFID- oder NFC-, Schnittstelle.

In einem einfachsten Fall einer Zugangskontrolle oder eines Logons wird das Lese-Gerät dem Nutzer nach Vorlegen oder Auflegen des ID-Tokens eine Bereitschaft zur Erfassung des biometrischen Merkmals anzeigen. Beispielsweise kann an dem Lese-Gerät ein hierfür entsprechend gekennzeichnetes Leuchtelement aufleuchten oder eine Anzeige mit einer Anweisung in einer menschlichen Sprache erfolgen.

Sodann kann der Nutzer das erfragte biometrische Merkmal vorlegen, beispielsweise seine Finger auf einen Fingerabdrucksensor legen, der an dem ID-Token oder an dem Lese-Gerät vorgesehen sein kann. Ergänzend oder alternativ kann vorgesehen sein, dass ein anderes biometrisches Merkmal angefordert wird. Beispielsweise könnte das Lese-Gerät, eine Stimmprobe anfordern.

Dieses Anfordern biometrischer Merkmale kann zufallsgesteuert ausgeführt sein. Beispielsweise könnte das Lesegerät oder der ID-Token zufällig auswählen, welcher Finger vorzulegen ist, oder welche Stimmprobe, also beispielsweise welches Wort oder welcher Satz gesprochen werden soll, abzugeben ist. Auch eine Kombination verschiedener biometrischer Merkmale und Untermerkmale kann zufällig ausgewählt werden, also beispielsweise "rechter Ringfinger" - "Aussprache des Wortes <<BERLIN>>".

Bei einer hinreichenden Übereinstimmung des im Nutzungsvorgang erfassten biometrischen Merkmals mit dem korrespondierenden abgespeicherten biometrischen Merkmal wird schließlich die Nutzaktion ausgelöst, also beispielsweise eine Tür oder ein Durchgangskreuz geöffnet oder der Logon vorgenommen.

Alternativ kann vorgesehen sein, dass eine elektronische Signatur vorgenommen werden soll. In diesem Szenario fordert der Nutzer an einem Arbeitsplatzrechner ein elektronisches Signieren beispielsweise eines Dokumentes an. Die Signatursoftware auf dem Arbeitsplatzrechner wird dann mit dem an dem Arbeitsplatzrechner angeschlossenen Lese-Gerät und dem darauf aufgelegten ID-Token in der Weise kommunizieren, dass der Nutzer nur noch sein biometrisches Merkmal, also beispielsweise Fingerabdruck oder Stimmprobe, vorzulegen braucht, um die Nutzaktion, hier also das Signieren des Dokumentes, auszulösen.

In einer Ausführungsform wird zusammenfassend erwogen: Verfahren zu einem biometrisch unterstützten Auslösen einer Nutzaktion mittels eines einem Nutzer zugeordneten, auf einem ID-Token gespeicherten Nutzdatensatzes, der ein Zertifikat; Zugangszertifikat; Verschlüsselungszertifikat; Signaturzertifikat sein kann; wobei der ID-Token: umfassen kann: elektronischer Datenträger; aufweisend zumindest einen Prozessor, einen Speicherbereich, einen geschützten Speicherbereich, eine drahtlose oder drahtgebundene Schnittstelle, Programminstruktionen, die dazu hergerichtet sind, einen Zugriff auf den geschützten Speicherbereich nur dann zu ermöglichen, wenn vorbestimmte Bedingungen als erfüllt bestimmt wurden, wobei das Verfahren umfasst:
In einem Produktionsschritt:
a) Herstellen des unpersonalisierten ID-Tokens;
   In einem Personalisierungsschritt:
b.1) (eventuell dezentrales) Personalisieren des ID-Tokens (beispielsweise durch einen Administrator oder ein geeignetes Selbstbedienungsterminal) unter Verwendung wenigstens eines identitätsstiftenden Attributs des Nutzers (welches beispielsweise identitätsstützende Angaben wie Personalnummer, Name, Email, etc. umfassen kann) (hierbei wird das Attribut der Einfachheit halber mit dessen Repräsentation gleichgesetzt, es ist klar, dass beispielsweise das Attribut "<Vorname Nachname>" eine elektronische Repräsentation besitzt, die aus Folgen von Nullen und Einsen bestehen kann, aber auch aus Folgen von vorbestimmten zwei unterschiedlichen Ladungszuständen oder aus Folgen von vorbestimmten zwei unterschiedlichen Strömen bestehen kann); b.2) Schreiben des identitätsstiftenden Attributs in einen ersten persistenten Speicherbereich des ID-Tokens, wobei der erste persistente Speicherbereich ein geschützter (beispielsweise schreibgeschützter, nur schreibbar unter Eingabe eines Administratorgeheimnisses oder an einem Selbstbedienungsterminal) Speicherbereich ist; b.3) erstes Erfassen wenigstens eines biometrischen Merkmals des Nutzers (beispielsweise Fingerabdruck, Iris, Handvenen, Stimmprobe(n), als Backup: Alternativen und/oder Kombinationen); b.4) Schreiben des ersten erfassten biometrischen Merkmals des Nutzers in einen zweiten persistenten Speicherbereich (im geschützten Speicherbereich; nur auslesbar durch bestimmte Lesegeräte; nur schreibbar, wenn Administrator dabei ist und sein Kennwort eingibt) des ID-Tokens, wobei der zweite persistente Speicherbereich ein geschützter Speicherbereich ist, um so ein gespeichertes biometrisches Merkmal des Nutzers zu erhalten;
   in einem Vorbereitungsvorgang oder einem Aktivierungsvorgang:
   Einbringen des Nutzdatensatzes, umfassend: c.1) Bereitstellen des Nutzdatensatzes;
c.2) zweites Erfassen des wenigstens einen biometrischen Merkmals des Nutzers
c.3) Vergleichen, mittels dazu im ID-Token bereitgestellter Programminstruktionen, des zweiten erfassten biometrischen Merkmals mit dem entsprechenden gespeicherten biometrischen Merkmal; c.4) im Fall, dass das Vergleichen ergibt, dass das zweite erfasste biometrische Merkmal mit dem entsprechenden gespeicherten biometrischen Merkmal eine Übereinstimmung oder wenigstens eine hinreichende Übereinstimmung ergibt: Schreiben des Nutzdatensatzes in einen dritten persistenten Speicherbereich des ID-Tokens, wobei der dritte persistente Speicherbereich ein geschützter Speicherbereich ist (Schreibberechtigung nur bei Vorliegen des korrekten biometrischen Merkmals; .. oder des Administratorkennwortes oder an einem Selbstbedienungsterminal);
   und in einem Nutzungsvorgang:
d.1) Vorlegen des ID-Tokens einer Einrichtung zur Bereitstellung eines Nutzens (Zugangskontrolle, Signaturanwendung, Logon, Verschlüsselungsanwendung)(das Vorlegen kann ein Einstecken in einem kontaktbehafteten Fall und ein Auflegen oder Gegenlegen im kontaktlosen Fall umfassen); d.2) optional: Überprüfen, mittels Programminstruktionen im ID-Token, ob die Einrichtung zur Kommunikation mit dem ID-Token berechtigt ist; d.3) drittes Erfassen des biometrischen Merkmals des Nutzers d.4) Vergleichen, mittels der dazu im ID-Token bereitgestellten Programminstruktionen, des dritten erfassten biometrischen Merkmals mit dem wenigstens einen gespeicherten biometrischen Merkmal; d.5) im Fall, dass das Vergleichen ergibt, dass das wenigstens eine erfasste biometrische Merkmal mit dem wenigstens einen gespeicherten biometrischen Merkmal eine Übereinstimmung oder wenigstens eine hinreichende Übereinstimmung ergibt: Auslösen der Nutzaktion.

Erwogen werden ferner die folgenden Kontrollmechanismen:
Erster persistenter Speicherbereich (identitätsstiftendes Attribut) und zweiter persistenter Speicherbereich (biometrisches Merkmal) können nur mit Administratorkennwort beschrieben werden.
Dritter persistenter Speicherbereich (Nutzdatensatz) kann nur unter Vorlage des biometrischen Merkmals beschrieben werden (eigentliche Erfindung) oder unter Verwendung des Administratorkennworts.
Sämtliche Speicherbereiche können unter Verwendung des Administratorkennworts gelöscht werden (Wiederverwendbarkeit für anderen Nutzer mit anderer Identität).

Ein einer Ausführungsform wird erwogen:
Eine Smartkarte oder ein ID-Token wird befähigt, über einen Reader Nutzdaten wie Zertifikate und Schlüssel zu laden. Damit das nur durch den legitimen Eigentümer oder Nutzer erfolgen kann, wird dieser Vorgang über ein biometrisches Merkmal des Eigentümers abgesichert. Dazu wird das biometrische Merkmal vorab auf der Karte gespeichert und beim Übertragen der Zertifikate und Schlüssel dort auch verglichen. Das kann sowohl mittels eines externen Biometriesensors erfolgen, als auch mit einem auf der Karte direkt verbauten Sensor.

Auf diese Weise können flexibel und sicher jederzeit Zertifikate und Schlüssel auf die Smartkarte geladen werden.

Zusammengefasst wird somit ein biometrisch abgesichertes Laden von Zertifikaten auf eine Smartkarte bereitgestellt.

Auf diese Weise ist die folgende Aufgabenstellung gelöst: Der Eigentümer der Smartkarte wird befähigt, über einen Reader Zertifikate und/oder Schlüssel zu laden. Es soll aber verhindert werden, dass jemand anderes, der sich im Besitz der Smartkarte befindet, Zertifikate und entsprechende Schlüssel auf die Karte laden kann, um sich dadurch eine fremde Identität aneignen zu können. So kann der Eigentümer beispielsweise abgelaufene Zertifikate erneuern, ohne die ganze Karte austauschen zu müssen.

Ein Beispielszenario, in dem als biometrisches Merkmal ein Fingerabdruck verwendet wird. Es kann selbstverständlich jedes andere biometrische Merkmal verwendet werden.

Ein Mitarbeiter eines Unternehmens holt seinen Betriebsausweis oder ID-Token oder Smartkarte an einer dafür definierten Stelle ab. Jetzt wird die Smartkarte durch den ausgebenden Administrator auf den Mitarbeiter personalisiert. Dazu werden sein Name, seine Personalnummer und seine Emailadresse über einen Reader auf der Karte gespeichert. Außerdem wird ein Fingerabdruck direkt auf der Karte angelernt. Jetzt ist die Smartkarte personalisiert und benötigt fortan immer einen Vergleich des Fingerabdrucks, um Nutzdaten wie Zertifikate und Schlüssel auf der Smartkarte zu speichern. Es kann zusätzlich vorgesehen sein, dass der Vergleich mit dem Fingerabdruck auch immer erforderlich ist, wenn mittels der Smartkarte eine Nutzaktion ausgelöst werden soll.

Dem Mitarbeiter wird durch den Administrator jetzt beispielsweise ein Zugangszertifikat ausgestellt. Dieses enthält beispielsweise den Namen des Mitarbeiters. Es kann alternativ oder zusätzlich auch die Emailadresse des Mitarbeiters enthalten sein. Um das Zertifikat auf die Karte übertragen zu können, muss der Mitarbeiter jetzt seinen Fingerabdruck bestätigen. Dies geschieht dadurch, dass der Mitarbeiter seinen Finger über einen entsprechenden Sensor erfasst und zusammen mit dem Zertifikat an die Smartkarte überträgt, oder bei Karten mit integriertem Fingerabdrucksensor, den Finger direkt auf der Karte abfragt.

Die Smartkarte prüft daraufhin den Fingerabdruck mit dem auf der Karte gespeicherten und wenn beide übereinstimmen, wird geprüft, ob der Name und/oder die Emailadresse auf der Karte mit denen im Zertifikat übereinstimmen. Sinn alle Prüfungen erfolgreich, wird das Zertifikat auf der Karte gespeichert. Zu einem späteren Zeitpunkt können weitere Zertifikate und/oder Schlüssel für den Eigentümer auf der Karte gespeichert oder vorhandene Zertifikate und/oder Schlüssel erneuert werden.

Mit anderen Worten ist ein Laden von Zertifikaten und/oder Schlüsseln unter Voraussetzung einer biometrischen Abfrage (beispielsweise Erfassen eines Fingerabdrucks) bereitgestellt.

### Bezugszeichenliste

- 1: Ablaufschema, das Verfahren repräsentierend
- 2: Nutzdatensatz
- 3: Bereitstellen des Nutzdatensatzes zum Schreiben in den ID-Token
- 4: ID-Token
- 5: Sensor für biometrisches Merkmal
- 6: Übertragung der vom Sensor 5 erfassten biometrischen Daten an einen im ID-Token angeordneten Prozessor (nicht gezeigt)
- 7: Vergleichen, ob das vom Sensor erfasste biometrische Merkmal mit dem gespeicherten Merkmal übereinstimmt
- 8: Entscheidungsverzweigung auf das Ergebnis des Vergleichens 7
- 9: Ungleichheits-Zweig
- 10: Abbruch (kein Schreiben des Nutzdatensatzes in den ID-Token)
- 11: Gleichheits-Zweig; Fortsetzen und Vergleichen, ob identitätsstiftende Daten übereinstimmen
- 12: Entscheidungsverzweigung
- 13: Ungleichheits-Zweig
- 14: Abbruch (kein Schreiben des Nutzdatensatzes in den ID-Token)
- 15: Gleichheits-Zweig; Fortsetzen
- 16: Schreiben des Nutzdatensatzes in den ID-Token

## Patentansprüche

1. Verfahren für ein biometrisch basiertes Auslösen einer Nutzaktion mittels eines einem Nutzer zugeordneten ID-Tokens, welches unter einem personalisierungsbezogenen Erfassen und Abspeichern eines biometrischen Merkmals personalisiert wurde und welcher ID-Token unter einem aktivierungsbezogenen Erfassen eines korrespondierenden Merkmals aktiviert wurde, umfassend:
a) Vorlegen des aktivierten ID-Tokens einer Einrichtung zum Auslösen einer Nutzaktion;
b) nutzaktionsbezogenes Erfassen des korrespondierenden biometrischen Merkmals des Nutzers;
c) Vergleichen des nutzaktionsbezogen erfassten korrespondierenden biometrischen Merkmals des Nutzers mit dem personalisierungsbezogen abgespeicherten korrespondierenden biometrischen Merkmal des Nutzers; und
d) im Fall, dass das Vergleichen ergibt, dass das nutzaktionsbezogen erfasste korrespondierende biometrische Merkmal des Nutzers hinreichend mit dem personalisierungsbezogen abgespeicherten korrespondierenden biometrischen Merkmal des Nutzers übereinstimmt: Auslösen der Nutzaktion, wobei das personalisierungsbezogene Erfassen des biometrischen Merkmals umfasst:
1) Personalisieren eines unpersonalisierten ID-Tokens unter Verwendung wenigstens eines identitätsstiftenden Attribut des Nutzers;
2) Schreiben des identitätsstiftenden Attributs in einen ersten persistenten Speicherbereich des ID-Tokens, wobei der erste persistente Speicherbereich ein geschützter Speicherbereich ist;
3) Erfassen des biometrischen Merkmals des Nutzers;
4) Schreiben des biometrischen Merkmals des Nutzers in einem zweiten persistenten Speicherbereich des ID-Tokens, wobei der zweite persistente Speicherbereich ein geschützter Speicherbereich ist,
um so ein abgespeichertes biometrisches Merkmal des Benutzers zu erhalten;
wobei ein geschützter Speicherbereich durch im ID-Token abgelegte Programm-Instruktionen derart geschützt ist, dass ein Lesen und/oder Schreiben in den geschützten Speicherbereich nur möglich ist, wenn die Programm-Instruktionen ermitteln, dass für das Lesen und/oder Schreiben eine vorbestimmte Bedingung erfüllt ist,
wobei das Schreiben des identitätsstiftenden Attributs und des biometrischen Merkmals des Nutzers während des personalisierungsbezogenen Erfassens nur an einer dafür vorgesehenen Personalisierungskonfiguration vorgenommen werden kann,
wobei von einer Vertrauensinstanz ein Zertifikat empfangen wird, das außer einer Kennung zumindest das identitätsstiftende Attribut enthält.

2. Verfahren nach dem voranstehenden Anspruch, wobei das aktivierungsbezogene Erfassen des biometrischen Merkmals umfasst:
1) Bereitstellen eines Nutzdatensatzes;
2) Erfassen des biometrischen Merkmals des Nutzers;
3) Vergleichen des erfassten korrespondierenden biometrischen Merkmals des Nutzers mit dem abgespeicherten korrespondierenden biometrischen Merkmal des Nutzers; und
4) im Fall, dass das Vergleichen ergibt, dass das erfasste korrespondierende biometrische Merkmal mit dem abgespeicherten korrespondierenden biometrischen Merkmal des Nutzers hinreichend übereinstimmt:
Schreiben des Nutzdatensatzes in einen dritten persistenten Speicherbereich des ID-Tokens, wobei der dritte persistente Speicherbereich ein geschützter Speicherbereich ist.

3. Verfahren nach einem der voranstehenden Ansprüche, wobei das Auslösen der Nutzaktion eine Vornahme einer elektronischen Signatur und/oder einer Verschlüsselung eines Datensatzes und/oder eines Logon an einem Rechner und/oder eines Öffnen eines Zugangs umfasst.

4. System zur Durchführung eines Verfahrens gemäß mindestens einem der Ansprüche 1 bis 3, umfassend:
- einen ID-Token umfassend: einen Prozessor, einen Speicher zum Speichern von Programminstruktionen, einen persistenten Speicher zum Speichern von Nutzer-bezogenen Informationen, einen durch wenigstens einen Teil der Programminstruktionen geschützten Speicher zum Speichern von zugriffsbeschränkten Nutzer-bezogenen Informationen;
- einen Rechner mit einer ersten Schnittstelle zur Kommunikation mit dem ID-Token sowie zu dessen Energieversorgung;
- einen biometrischen Sensor, der am ID-Token und/oder an einer zweiten Schnittstelle des Rechners vorgesehen ist;
- eine Komponente zum Durchführen der Nutzaktion.

5. System nach Anspruch 4, wobei die Komponente zum Durchführen der Nutzaktion wenigstens eines von folgenden ist: Signaturprogramm zum Unterstützen eines Erzeugens einer digitalen Signatur mithilfe des ID-Tokens; Verschlüsselungsprogramm zum Unterstützen eines Verschlüsselns eines Datums mithilfe des ID-Tokens; Aktorschnittstelle zur Betätigung eines Öffnungs- und/oder Schließmechanismus'; Authentifizierungsprogramm zum Unterstützen eines Logon am Rechner mithilfe des ID-Tokens.

## Claims

1. A method for biometric-based triggering of a useful action by means of an ID token associated with a user, which ID token has been personalised by a personalisation-related sensing and storing of a biometric feature and has been activated by an activation-related sensing of a corresponding feature, the method comprising the steps of:
a) presenting the activated ID token to a device for triggering a useful action;
b) sensing the corresponding biometric feature of the user in relation to the useful action;
c) comparing the corresponding biometric feature of the user sensed in relation to the useful action with the corresponding biometric feature of the user stored in relation to personalisation; and
d) if the comparison indicates that the corresponding biometric feature of the user sensed in relation to the useful action adequately matches the corresponding biometric feature of the user stored in relation to personalisation: triggering the useful action, the personalisation-related sensing of the biometric feature comprising the steps of:
1) personalising a non-personalised ID token using at least one identity-establishing attribute of the user;
2) writing the identity-establishing attribute in a first persistent memory area of the ID token, the first persistent memory area being a protected memory area;
3) detecting the biometric feature of the user;
4) writing the biometric feature of the user in a second persistent memory area of the ID token, the second persistent memory area being a protected memory area,
in order to thus obtain a stored biometric feature of the user;
wherein a protected memory area is protected by program instructions stored in the ID token in such a way that a reading and/or writing in the protected memory are is possible only if the program instructions conclude that a predetermined condition is satisfied for the reading and/or writing,
wherein the writing of the identity-establishing attribute and of the biometric feature of the user during the personalisation-related sensing may be performed only on a personalisation configuration intended for this purpose,
wherein a certificate is received from a trust entity and contains at least the identity-establishing attribute in addition to an identifier.

2. The method according to the preceding claim, wherein the activation-related sensing of the biometric feature comprises the steps of:
1) providing a useful data record;
2) sensing the biometric feature of the user;
3) comparing the sensed corresponding biometric feature of the user with the stored corresponding biometric feature of the user; and
4) in the event that the comparison reveals that the sensed corresponding biometric feature sufficiently matches the stored corresponding biometric feature of the user:
writing the useful data record to a third persistent memory area of the ID token, the third persistent memory area being a protected memory area.

3. The method according to either one of the preceding claims, wherein the triggering of the useful action comprises the performing of: an electronic signature and/or an encryption of a data record and/or a log-on to a computer and/or an opening of an access point.

4. A system for carrying out a method according to at least one of claims 1 to 3, comprising:
- an ID token comprising: a processor, a memory for storing program instructions, a persistent memory for storing user-related information, a memory protected by at least part of the program instructions for storing access-restricted user-related information;
- a computer with a first interface for communication with the ID token and for supplying power to same;
- a biometric sensor, which is provided on the ID token and/or on a second interface of the computer;
- a component for carrying out the useful action.

5. The system according to claim 4, wherein the component for carrying out the useful action is at least one of the following: a signature program for supporting a generation of a digital signature with the aid of the ID token; an encryption program for supporting an encryption of a date with the aid of the ID token; an actuator interface for actuating an opening and/or closing mechanism; authentication program for supporting a log-on to the computer with the aid of the ID token.

## Revendications

1. Procédé permettant un déclenchement sur une base biométrique d'une action d'utilisation au moyen d'un jeton d'ID associé à un utilisateur, lequel a été personnalisé par une détection et une mémorisation en relation avec la personnalisation d'une caractéristique biométrique et lequel jeton d'ID a été activé par une détection en relation avec l'activation d'une caractéristique correspondante, comprenant :
a) la présentation du jeton d'ID activé d'un dispositif pour le déclenchement d'une action d'utilisation ;
b) la détection en relation avec l'action d'utilisation de la caractéristique biométrique correspondante de l'utilisateur ;
c) la comparaison de la caractéristique biométrique correspondante détectée en relation avec l'action d'utilisation avec la caractéristique biométrique correspondante mémorisée en relation avec la personnalisation de l'utilisateur ; et
d) dans le cas où la comparaison a pour résultat que la caractéristique biométrique correspondante détectée en relation avec l'action d'utilisation de l'utilisateur correspond suffisamment avec la caractéristique biométrique correspondante mémorisée en relation avec la personnalisation de l'utilisateur : le déclenchement de l'action d'utilisation, où la détection de la caractéristique biométrique en relation avec la personnalisation comprend :
1) une personnalisation d'un jeton d'ID non personnalisé moyennant l'emploi d'au moins un attribut favorisant la construction identitaire de l'utilisateur ;
2) une écriture de l'attribut favorisant la construction identitaire dans une première zone de mémoire persistante du jeton d'ID, où la première zone de mémoire persistante est une zone de mémoire protégée ;
3) la détection de la caractéristique biométrique de l'utilisateur ;
4) l'écriture de la caractéristique biométrique de l'utilisateur dans une deuxième zone de mémoire persistante du jeton d'ID, où la deuxième zone de mémoire persistante est une zone de mémoire protégée,
afin d'obtenir ainsi une caractéristique biométrique mémorisée de l'utilisateur ;
dans lequel une zone de mémoire protégée est protégée par des instructions de programme présentées dans le jeton d'ID de telle manière qu'une lecture, et/ou une écriture, n'est possible dans la zone de mémoire protégée que si les instructions de programme déterminent qu'une condition prédéfinie est remplie pour la lecture et/ou l'écriture,
dans lequel l'écriture de l'attribut favorisant la construction identitaire et de la caractéristique biométrique de l'utilisateur ne peut être effectuée que pendant la détection en relation avec la personnalisation d'une configuration de personnalisation prévue à cet effet,
dans lequel un certificat, qui contient au moins l'attribut favorisant la construction identitaire en dehors de l'identité, est réceptionné par une instance de confiance.

2. Procédé selon la revendication précédente, dans lequel la détection en relation avec l'activation de la caractéristique biométrique comprend :
1) la mise au point d'un ensemble de données d'utilisation ;
2) la détection de la caractéristique biométrique de l'utilisateur ;
3) la comparaison de la caractéristique biométrique correspondante détectée de l'utilisateur avec la caractéristique biométrique correspondante mémorisée de l'utilisateur ; et
4) dans le cas où la comparaison a pour résultat que la caractéristique biométrique correspondante détectée correspond suffisamment avec la caractéristique biométrique correspondante mémorisée de l'utilisateur : l'écriture de l'ensemble de données d'utilisation dans une troisième zone de mémoire persistante du jeton d'ID, où la troisième zone de mémoire persistante est une zone de mémoire protégée.

3. Procédé selon l'une des revendications précédentes, dans lequel le déclenchement de l'action d'utilisation comprend une exécution de signature électronique, et/ou d'un cryptage d'un ensemble de données, et/ou d'une connexion à un calculateur, et/ou de l'ouverture d'un accès.

4. Système permettant l'exécution d'un procédé selon au moins une des revendications 1 à 3, comprenant :
- un jeton d'ID comprenant : un processeur, une mémoire pour le stockage d'instructions de programme, une mémoire persistante pour le stockage d'informations en relation avec un utilisateur, une mémoire protégée par au moins une partie des instructions de programme pour le stockage d'informations en relation avec un utilisateur d'accès restreint ;
- un calculateur doté d'une première interface pour la communication avec le jeton d'ID ainsi que pour son alimentation en énergie ;
- un capteur biométrique qui est prévu sur le jeton d'ID et/ou au niveau d'une deuxième interface du calculateur ;
- une composante permettant l'exécution de l'action d'utilisation.

5. Système selon la revendication 4, dans lequel la composante permettant l'exécution de l'action d'utilisation est au moins l'une des suivantes : un programme de signature pour apporter une assistance à la création d'une signature numérique à l'aide du jeton d'ID ; un programme de cryptage pour apporter une assistance à un cryptage d'une donnée à l'aide du jeton d'ID ; une interface d'actionneur pour l'actionnement d'un mécanisme d'ouverture et/ou de fermeture ; un programme d'authentification pour apporter une assistance à une connexion au calculateur à l'aide du jeton d'ID.
